# EUROPEAN PATENT APPLICATION

(11) **EP 3 521 663 A1**
(43) Date of publication of application: **07.08.2019**
(21) Application number: 17855868.0
(22) Date of filing: 20.09.2017
(51) Int. Cl.: F16H 63/20, F16H 61/34

(54) **MANUAL TRANSMISSION**

(30) Priority: 29.09.2016 JP 2016190710
(71) Applicant: Aisin AI Co., Ltd., Nishio-shi, Aichi 445-0006 (JP)
(72) Inventor: MATSUMOTO, Mizuki, Nishio-shi Aichi 445-0006 (JP); NINOMIYA, Ryosuke, Nishio-shi Aichi 445-0006 (JP); ICHIKAWA, Masaya, Nishio-shi Aichi 445-0006 (JP); OSAWA, Hideya, Nishio-shi Aichi 445-0006 (JP)
(74) Representative: TBK
(86) International application number: PCT/JP2017/033844
(87) International publication number: WO 2018/061913

(57) **Abstract**

This manual transmission is provided with: a shift selection shaft head (2) fixed to a shaft (1); a selection inner lever (4) connected to the shift selection shaft head (2); a guide pin (6) formed integrally with the shift selection shaft head (2); and a guide plate (7) that engages with the guide pin (6). In order to suppress bending of the shaft (1), the manual transmission includes a connection part (4a) for the shift selection shaft head (2) and the selection inner lever (4), and an engagement part (6a) for the guide pin (6) and the guide plate (7), the connection part (4a) and the engagement part (6a) being disposed inside one region (R1) among four regions partitioned by a first virtual plane (P1) and a second virtual plane (P2).

## Description

### TECHNICAL FIELD

This invention relates to a manual transmission which performs speed change operation by an operation of a shift select lever by an operator.

### BACKGROUND OF THE TECHNOLOGY

Conventionally, a shift mechanism for a manual transmission, such as a type disclosed in Patent Literature 1, is known (hereinafter, referred to as "a first conventional device"). The first conventional device is configured such that when the shift select lever is select-operated, the rotation is transmitted to the inner lever from the interlock member and when the shift select lever is shift-operated, the interlock member and the inner lever are moved relatively along in the axis line. According to the first conventional device, the peripheral surface of the inner lever which is fixed to the shift select shaft and a guide plate formed on the interlock member which is connected to the shift select lever are configured to be slidably in contact with each other. Therefore, the connection between the inner lever and the interlock member is stable not to generate a rattling upon select operation.

Further, conventionally, a shift control device for a manual transmission, such as a type disclosed in Patent literature 2 is known (hereinafter referred to as "a second conventional device"). The second conventional device includes a first bearing and a second bearing which support the shift select shaft, wherein the first bearing is provided at the shift outer lever side where the operation force is inputted to the shift select lever. According to the second conventional device, a clearance between the first bearing and the shift select shaft is set to be larger than the clearance between the second bearing and the shift select shaft. In addition, a large operation force to be applied to the shift select lever is set and accordingly, even the shift select shaft under rotation is deflected, the shift select shaft is brought into contact with the second bearing thereby to be able to operate the shift select shaft.

### DOCUMENT LIST OF PRIOR ARTS

### PATENT LITERATURE

Patent Literature 1: JP2007 -132358 A
Patent Literature 2: JP2014-81061 A

### DISCLOSURE OF INVENTION

### PROBLEMS TO BE SOLVED

It is noted here that according to the second conventional device as explained above, upon rotation, the shift select shaft may be deflected by an operation force applied to the shift select lever. In other words, when the shift select shaft is rotated, the operation force applied to the shift select lever is inputted as a force in a direction orthogonal to the axis line direction of the shift select shaft and accordingly, the deflection is generated at the shift select shaft. As explained above, when a deflection is generated at the shift select shaft, in the first conventional device, a possibility of generation of a rattling caused by such deflection of the shift select shaft may arise.

Further, in a manual transmission, in some cases, a guide pin which guides the movement and the rotation of the shift select shaft and a guide plate which is engaged with the guide pin are provided. When such guide pin and the guide plate are provided, when further operation force is inputted to the shift select shaft after shifting operation and the selecting operation have been finished, a reaction force generated between the guide pin and the guide plate is inputted to the shift select shaft. In such case, the resultant force of the operation force and the reaction force may be inputted to the shift select shaft, which may lead to an easy generation of a large deflection. The larger the deflection, the easier the rattling (undesired displacement amount of the shift select lever) is generated (select rattling). This may deteriorate the shift feeling.

The present invention was made in consideration of the above issues and problems of the related arts and it is an object of the invention to provide a manual transmission which can obtain a good shift feeling by suppressing a deflection of the shift select shaft.

### MEANS FOR SOLVING THE PROBLEM

The manual transmission associated with the invention of claim 1 to solve the above problems includes a shift select shaft movable along in an axis line direction and at the same time rotatable about the axis line, a connecting member fixed to the shift select shaft and movable with the shift select shaft as a unit and at the same time rotatable therewith, a lever member connected to the connecting member and at the same time based on an operation force inputted for rotating the shift select shaft, pushing the connecting member so that the shift select shaft and the connecting member are rotated about the axis line, a guide pin provided to be projecting from an outer peripheral surface of the shift select shaft and movable with the shift select shaft as a unit and at the same time rotatable with the shift select shaft in response to a movement of the shift select shaft in the axis line direction and a rotation of the shift select shaft about the axis line, and a guide plate formed with a groove portion with which the guide pin which displaces in response to the movement and the rotation of the shift select shaft engages at a portion of the shift select shaft and guides the movement and the rotation of the shift select shaft, wherein one fork among a plurality of forks which is connected to the shift select shaft is selected by a selecting operation which corresponds to one of the movement and the rotation of the shift select shaft and the selected one fork is operated by a shifting operation which corresponds to the other of the movement and the rotation of the shift select shaft to thereby establish a speed change stage to complete a speed change operation, and a connecting portion provided the connecting member connecting to the lever member, an engaging portion provided the guide pin engaging with the groove portion formed at the guide plate, and, wherein the connecting member, the lever member, the guide pin and the guide plate are arranged so that under a state that the guide pin and the guide plate are engaged at the engaging portion and at the same time the guide pin restricts the rotation of the shift select shaft after a completion of the speed change operation, assuming that the portion of the shift select shaft is a fulcrum, the connecting portion is a point of effort, the engaging portion is a point of load and that the fulcrum, the point of effort and the point of load exist on a same virtual plane, an operation direction of a reaction force generated at the point of load becomes a direction opposite to the operation direction of the operation force inputted to the point of effort.

As explained above, after completion of the speed change operation of the manual transmission, the guide pin is engaged in the groove portion of the guide plate and the rotation of the shift select shaft can be restricted. Further, the portion of the shift select shaft serves as the fulcrum, the connecting portion serves the point of effort and the engaging portion serves the point of load and when these fulcrum, point of effort and point of load exist on the same virtual plane, the connecting member, the lever member, the guide pin and the guide plate can be arranged so that the operating direction of the reaction force generated at the point of load becomes the direction opposite to the operation direction of the operation force inputted to the connecting portion. Thus, the reaction force inputted from the engaging portion can decrease the operation force inputted from the connecting portion and accordingly, the force generating deflection to the shift select shaft can be lessened.

By structuring the manual transmission as explained above, when the shift select shaft is rotated after the completion of the speed change operation, the deflection amount of the shift select shaft can be reduced. Accordingly, when the shift select lever operated by the driver of the vehicle and the lever member are connected through a speed change cable or the like, the rattling of the shift select lever, for example, a elect rattling after the completion of the speed change operation can be lessened to thereby attain a good shift feeling.

### BRIEF EXPLANATION OF ATTACHED DRAWINGS

Fig. 1 is an explanation view of the transmission;
Fig. 2 is a perspective view of the shift mechanism;
Fig. 3 is a perspective view for explaining the arrangement of the shift select shaft head, the select inner lever, the guide pin and the guide plate shown in fig. 2;
Fig. 4 is a view for explaining the shape of the groove portion shown in Fig. 3 in a cross-sectional direction;
Fig. 5 is a view for explaining a shift pattern;
Fig. 6 is a perspective view explaining the select operation force inputted to the connecting portion, the reaction force inputted to the engaging portion, and the resultant force inputted to the shift select shaft;
Fig. 7 is a view explaining the locus of the select inner lever and the locus of the guide pin shown in Fig. 3;
Fig. 8 is a view explaining the engagement of the guide pin and the groove portion formed on the guide plate; and
Fig. 9 indicates a modified embodiment and showing the relationship among the area and the connecting portion and the engaging portion.

### THE EMBODIMENTS FOR IMPLEMENTING THE INVENTION

### (Structure of Manual Transmission)

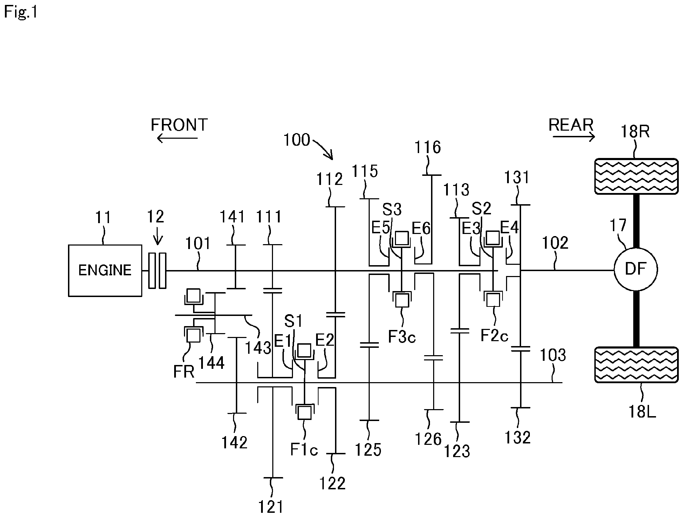

The transmission 100 which corresponds to the manual transmission according to the embodiment will be explained hereinafter with reference to Fig. 1. It is noted here that in Fig. 1, the side where the engine 11 is located is defined to be the front side of the transmission 100 and the side where the differential (DF) is located is defined to be the rear side of the transmission 100. Further, the front/rear direction of the transmission 100 is defined to be the axis line direction thereof.

As indicated in Fig. 1, the transmission 100 according to the embodiment of the invention includes an input shaft 101, an output shaft 102, a counter shaft 103, a first drive gear 111 through a sixth drive gear 116, a first driven gear 121 through a sixth driven gear 126, an output shaft side reduction gear 131, a counter shaft side reduction gear 132, a reverse drive gear 141, a reverse driven gear 142, an idler shaft 143, a reverse idler gear 144, a first sleeve S1 through a third sleeve S3 and a first fork F1 through a third fork F3 and a reverse fork FR.

The input shaft 101, the output shaft 102 and the counter shaft 103 are rotatably provided at the housing (not shown) of the transmission 100. The input shaft 101 is connected to the clutch 12 and the rotational torque is transmitted from the engine 11 via the clutch 12. The output shaft 102 is provided co-axially with the input shaft 101 at the rear side of the input shaft 102. The differential (DF) 17 which absorbs the rotational speed difference between the drive wheels 18R and 18L is connected to the output shaft 102. The counter shaft 103 is provided in parallel with the input shaft 101 and the output shaft 102.

The first drive gear 111 and the second drive gear 112 are fixed on the input shaft 101. The fifth drive gear 115, the sixth drive gear 116 and the third drive gear 113 are idly rotatably mounted on the input shaft 101. According to this embodiment, from front side to rear side of the input shaft 101, the first drive gear 111, the second drive gear 112, the fifth drive gear 115, the sixth drive gear 116 and the third drive gear 113 are arranged in this order.

The first driven gear 121 and the second driven gear 122 are idly rotatably mounted on the counter shaft 103. The fifth driven gear 125, the sixth driven gear 126 and the third driven gear 123 are fixed to the counter shaft 103. According to this embodiment, from front side to rear side of the counter shaft 103, the first driven gear 121, the second driven gear 122, the fifth driven gear 125, the sixth driven gear 126 and the third driven gear 123 are provided in this order.

The first drive gear 111 and the first driven gear 121 are mutually engaged with each other. The second drive gear 112 and the second driven gear 122 are mutually engaged with each other. The third drive gear 113 and the third driven gear 123 are mutually engaged with each other. The fifth drive gear 115 and the fifth driven gear 125 are mutually engaged with each other. The sixth drive gear 116 and the sixth driven gear 126 are mutually engaged with each other.

The gear diameters of the first drive gear 111, the second drive gear 112, the third drive gear 113, the fifth drive gear 115 and the sixth drive gear 116 become larger in this order. The gear diameters of the first driven gear 121, the second driven gear 122, the third driven gear 123, the fifth driven gear 125 and the sixth driven gear 126 become smaller in this order. It is noted that the gear diameter of the fifth drive gear 115 is larger than that of the fifth driven gear 125.

The output shaft side reduction gear 131 is provided at the output shaft 102. The counter shaft side reduction gear 132 is provided on the counter shaft side 103. The output shaft side reduction gear 131 and the counter shaft side reduction gear 132 are mutually engaged with each other. The gear diameter of the counter shaft side reduction gear 132 is set to be smaller than the gear diameter of the output shaft side reduction gear 131. Therefore, the rotational speed of the engine 11 (in more detail, the input shaft 101) between the counter shaft side reduction gear 132 and the output shaft side reduction gear 131 is decelerated to thereby increase the rotational torque from the engine 11.

The idler shaft 143 is rotatably provided at the housing of the transmission 100 in parallel with the input shaft 101 and the counter shaft 103. The reverse drive gear 141 is fixed to the input shaft 101. The reverse driven gear 142 is fixed to the counter shaft 103. The reverse idler gear 144 is provided at the idler shaft 143 to be movable along in an axis line direction (front/rear direction). The reverse idler gear 144 engages with the reverse fork FR. The reverse idler gear 144 meshes with the reverse drive gear 141 and the reverse driven gear 142 or does not mesh with the reverse drive gear 141 and the reverse driven gear 142.

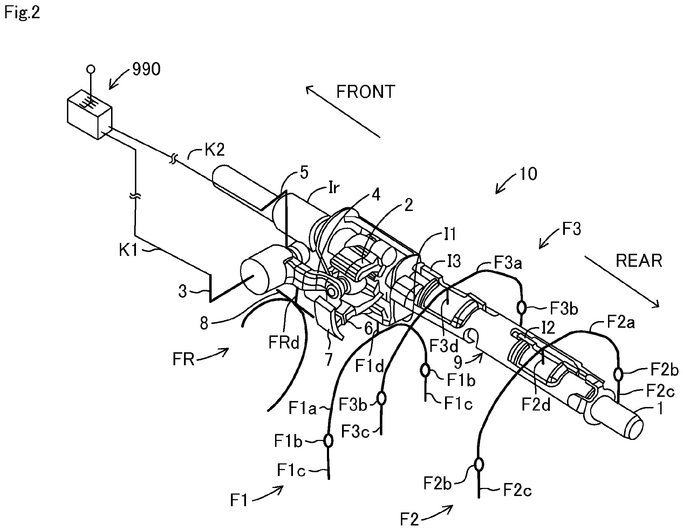

The first sleeve S1 is provided on the counter shaft 103 between the first driven gear 121 and the second driven gear 122 to prohibit a relative rotation but to allow a movement along in an axis line direction. The first sleeve S1 is engaged with pad portion F1c (See Fig. 2) of the first fork F1. The first sleeve S1 engages with or disengages from one of the first engaging/disengaging portion E1 formed on the first driven gear 121 and the second engaging/disengaging portion E2 formed on the second driven gear 122, depending on the axis line position of the first sleeve S1.

The second sleeve S2 is provided on the input shaft 101 between the third drive gear 113 and the output shaft 102 to prohibit a relative rotation with the input shaft 101 but to allow a movement along in the axis line direction relative thereto. The second sleeve S2 is engaged with the pad portion F2c (See Fig. 2) of the second fork F2. The second sleeve S2 engages with or disengages from one of the third engaging/disengaging portion E3 formed on the third drive gear 113 and the fourth engaging/disengaging portion E4 formed on the output shaft 102, depending on the axis line position of the second sleeve S2.

The third sleeve S3 is provided on the input shaft 101 between the fifth drive gear 115 and the sixth drive gear 116 to prohibit a relative rotation with the input shaft 101 but to allow a movement along in the axis line direction relative thereto. The third sleeve S3 is engaged with the pad portion F3c (See Fig. 2) of the third fork F3. The third sleeve S3 engages with or disengages from one of the fifth engaging/disengaging portion E5 formed on the fifth drive gear 115 and the sixth engaging/disengaging portion E6 formed on the sixth drive gear 116, depending on the axis line position of the third sleeve S3.

It is noted here that a synchronizer mechanism is provided between each of the first sleeve S1 through the third sleeve S3 and each of the engaging/disengaging portions E1 through E6 for synchronizing the rotational speed difference between the first sleeve S1 through third sleeve S3 and each of the engaging/disengaging portions E1 through E6. The synchronizer mechanism used here is a well-known technology mechanism and the explanation thereof will be omitted.

### (Shift Mechanism)

The shift mechanism 10 will be explained hereinafter with reference to Figs. 2 through 8. The shift mechanism 10 is configured to establish plurality of speed stages of the transmission 100. The shift mechanism 10 includes, as shown in Fig. 2, the shift select shaft 1, the shift select shaft head 2 as a "connecting member", the select outer lever 3 forming the "lever member", the select inner lever 4 which forms the "lever member", the shift outer lever 5, the guide pin 6 and the guide plate 7. Further, the shift mechanism 10 includes the reverse fork shaft 8, the interlock member 9, the first fork F1 through the third fork F3, the reverse fork FR and the first inner lever 11 through the third inner lever 13 and the reverse inner lever Ir.

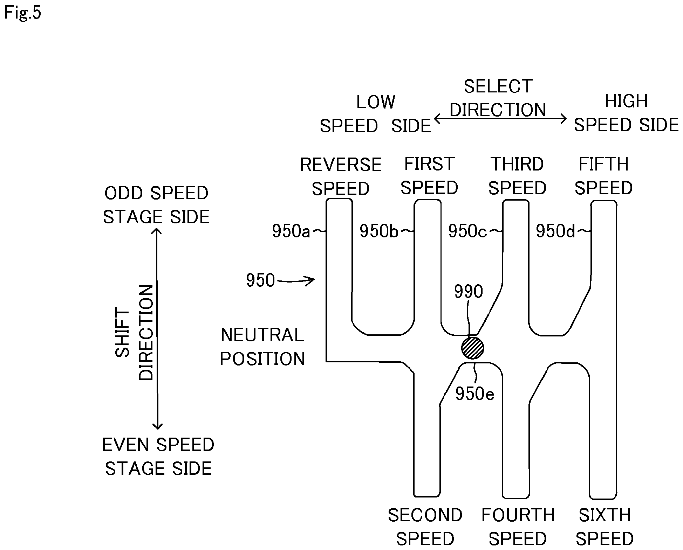

The shift select shaft 1 (hereinafter referred to simply as "shaft 1") is arranged along in a front/rear direction of the transmission 100 and is housed in the housing of the transmission 100 to be movable in the axis line direction and rotatable about thereabout. The shaft 1 moves as "a shifting operation which is the movement as one of the movement and the rotation" in response to "the operation force (hereinafter referred to as "shift operation force") inputted for moving the shaft 1 along in the axis line direction" by the shift operation in which the shaft 1 is moved in a shift direction (See Fig. 5) of the shift select lever 990. Further, the shaft 1 rotates as "a selecting operation which is the rotation as the other of the movement and the rotation" in response to "the operation force (hereinafter referred to as "select operation force") inputted for rotating the shaft 1" by the select operation in which the shaft 1 is moved in a select direction (See Fig. 5) of the shift select lever 990.

The shift select shaft head 2 as the connecting member is configured as shown in Fig 2, to be fixed projecting from the outer peripheral surface of the shaft 1 at the front side of the shaft 1. By this configuration, the shift select shaft head 2 moves with the shaft 1 as a unit and at the same time rotates therewith. In other words, the shift select shaft head 2 moves along in the axis line together with the shaft 1 upon shifting operation of the shaft 1. Further, the shift select shaft head 2 rotates with the shaft 1 about the axis line upon selecting operation of the shaft 1. Accordingly, the shift select shaft head 2 is a connecting member which is "fixed to the shift select shaft 1 and moves with the shaft 1 as a unit and at the same time rotates therewith in response to the movement and the rotation of the shift select shaft 1".

The select outer lever 3 which forms a "lever member" is provided outside of the housing of the transmission 100. The select outer lever 3 is connected to the shift select lever 990 which is operated by a driver of the vehicle via the speed change cable K1, as shown in Fig. 2. Thus, when the operation force inputted to the shift select lever 990 is transmitted via the speed change cable K1, the select outer lever 3 is rotated about the rotation axis which is orthogonal to the axis line of the shaft 1 by the transmitted select operation force.

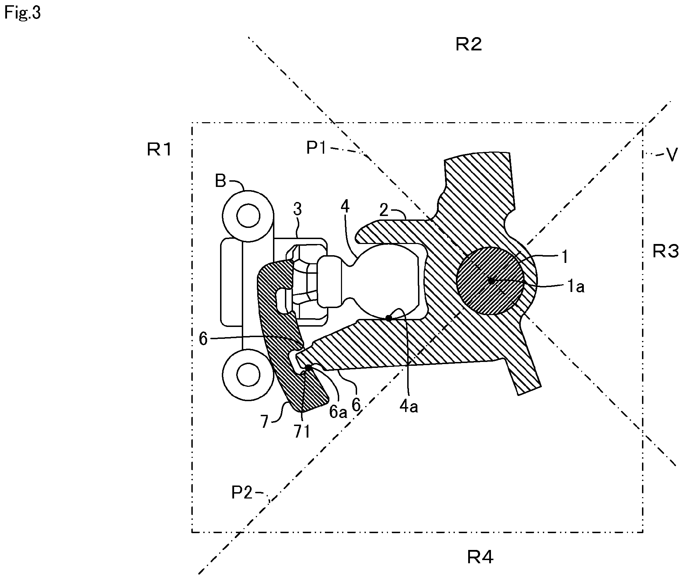

The select inner lever 4 which forms the "lever member" is provided in the housing of the transmission 100. The select inner lever 4 is, as shown in Figs. 2 and 3, fixed to the select outer lever 3 at the base end side as a unit therewith and the tip end side is connected to the shift select shaft head 2. Thus, when the select outer lever 3 is rotated by the transmitted select operation force, the select inner lever 4 rotates with the select outer lever 3 as a unit and pushes the shift select shaft head 2. Thus, by the pushing of the select inner lever 4 to the shift select shaft head 2, the select operation force is transmitted to the shift select shaft head 2. When the select operation force is transmitted to the shift select shaft head 2, since the shift select shaft head 2 is projecting from the outer peripheral surface of the shaft 1, the shaft 1 and the shift select shaft head 2 are rotated as a unit by the transmitted select operation force.

Accordingly, the select outer lever 3 and the select inner lever 4 form the lever member "which is connected to the shift select shaft head 2 serving as the connecting member and at the same time pushing the shift select shaft head 2 so that the shaft 1 and the shift select shaft head 2 are rotated about the axis line of the shaft 1 based on the select operation force as the operation force inputted to rotate the shaft 1".

The shift outer lever 5 is provided outside of the housing and is connected to the shift select lever 990 via the speed change cable K2, as shown in Fig. 2. Thus, when the shift operation force inputted to the shift select lever 990 is transmitted via the speed change cable K2, the shift outer lever 5 is rotated about the rotation axis which is substantially orthogonal to the axis line of the shaft 1 by the transmitted shift operation force. It is noted here that the shift outer lever 5 is connected to the shift select shaft head 2 via a link mechanism (not shown) and by the operation of the link mechanism, the rotation of the shift outer lever 5 is converted to the axial movement along in the axis line direction of the shaft 1.

The shift pattern 950 which indicates a movable range of the shift select lever 990 will be explained here with reference to Fig. 5. The shift pattern 950 includes reverse gate 950a, 1 - 2 speed gate 950b, 3 - 4 speed gate 950c and 5 - 6 speed gate 950d in parallel with one another. The neutral positions of these gates are in communication through the select gate 950e. It is noted here that the reverse gate 950a, the 1 - 2 speed gate 950b, the 3 - 4 speed gate 950c and the 5 - 6 speed gate 950d are formed in the shift direction which is the front/rear direction. Further, each neutral position of the reverse gate 950a, the 1 - 2 speed gate 950b, the 3 - 4 speed gate 950c and the 5 - 6 speed gate 950d is positioned at the intermediate position in shift direction. The neutral position of the reverse gate 950a is positioned at the end of the reverse gate 950a, according to this embodiment, at the lower end of the reverse gate 950a. Further, the select gate 950e is formed in the select direction which is the right/left direction. It is also noted that the "shift operation" means that the operator of the vehicle operates the shift select lever 990 in a shift direction" and that the "select operation" means that the operator of the vehicle operates the shift select lever 990 in a select direction.

As shown in Figs. 2 and 3, the guide pin 6 is provided at the shift select shaft head 2, projecting from the outer peripheral surface of the shaft 1. In more detail, the guide pin 6 is provided at the shift select shaft head 2 projecting towards the side where the select inner lever 4 is arranged (left side as viewed in Figs. 2 and 3) with respect to the right/left positions, defining the shaft 1 as the reference point. Therefore, the guide pin 6 is movable and rotatable together with the shaft 1 in response to the movement of the shaft 1 which corresponds to the shifting operation and the rotation of the shaft 1 which corresponds to the selecting operation.

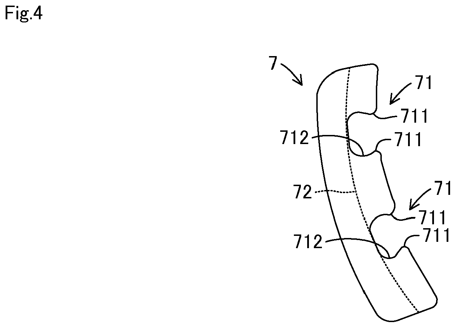

The guide plate 7 is fixed to the housing of the transmission 100 by means of a bracket B, as shown in Fig. 3. The guide plate 7 is provided facing the guide pin 6 and guides the axial movement and the rotation of the guide pin 6 (i.e., the shaft 1). In more detail, the guide plate 7 is provided at the side where the select inner lever 4 is arranged (left side as viewed in Figs. 2 and 3) with respect to the right/left positions, defining the shaft 1 as the reference point. As shown in Fig. 4, the guide plate 7 is provided with groove portions 71 and 72 which are engaged with the guide pin 6 which is movable in response to the shifting operation and the selecting operation of the shaft 1. The groove 71 is formed such that the groove 71 is arranged to be in parallel with the axis line of the shaft 1 in response to the displacement of the guide pin 6 which moves with the shaft 1 as a unit by the shifting operation in response to the shift operation. The shape in cross-sectional direction of the groove portion 71 is formed in approximately a C-shape and the opening end portion 711 of the groove portion 71 is set to be narrower in groove width (narrow width) than the deep side portion 712 which is the bottom of the groove 71. The groove 72 is formed to be orthogonal to the axis line of the shaft 1 in response to the displacement of the guide pin 6 which moves with the shaft 1 as a unit by the selecting operation in response to the select operation.

In other words, the groove portion 71 formed on the guide plate 7 is provided extending in a moving direction of the guide pin 6 by the shifting operation of the shaft 1, i.e., in the axis line direction of the shaft 1. Further, the groove 72 formed on the guide plate 7 is provided extending in a rotation direction of the guide pin 6 by the selecting operation of the shaft 1, i.e., in the direction orthogonal to the axis line direction of the shaft 1.

As shown in Fig. 3, "the connecting portion 4a connecting the shift select shaft head 2 and the select inner lever 4" as the point of effort and "the engaging portion 6a engaging the guide pin 6 with the guide plate 7" as the point of load are arranged within one area R1 among the four area R1, R2, R3 and R4 delimited by the first virtual plane P1 which includes the axis line of "the shaft 1" and the second virtual plane P2 which includes the axis line of the shaft 1 and orthogonal to the first virtual plane P1. As explained, the connecting portion 4a as the point of effort and the engaging portion 6a as the point of load are arranged in the same area R1 and accordingly, the reaction force which is inputted to the guide pin 6 from the guide plate 7 (engaging portion 6a) can be acted against the select operation force to thereby reduce the force which gives deflection to the shaft 1 which becomes the fulcrum (which includes the fulcrum). According to the transmission 100 explained above, the shift select shaft head 2, the select inner lever 4, the guide pin 6 and the guide plate 7 are arranged such that the reaction force operation direction becomes opposite to the select operation force operation direction. In other words, the shift select shaft head 2, the select inner lever 4, the guide pin 6 and the guide plate 7 are arranged in the same side with respect to the shaft 1 (left side as viewed in Figs. 2 and 3).

Further, as shown in Fig. 3, "the connecting portion 4a connecting the shift select shaft head 2 and the select inner lever 4" as the point of effort and "the engaging portion 6a engaging the guide pin 6 with the guide plate 7" as the point of load are arranged on the same virtual plane V (same virtual plane) and the point 1a which is the intersection between the axis line of the shaft 1 and the same virtual plane V becomes the fulcrum, i.e., "the portion of the shaft" becomes the fulcrum. In other words, the fulcrum 1a, the point of effort and the point of load exist on the same virtual plane V (on the same virtual plane). When these points exist on the same virtual plane V, as will be explained later in detail, the reaction force inputted to the guide pin 6 from the guide plate 7 (engaging portion 6a) can be applicable against the select operation force. It is noted that hereinafter, the point 1a as "the portion of the shaft" will be referred to also as the fulcrum 1a.

Returning to the explanation regarding Fig. 2, the plurality of forks, i.e., the first fork F1, the third fork F3 and the second fork F2, in this order from front side to rear side are positioned facing to one another, riding over the shaft 1 and the interlock member 9. According to the embodiment, the first fork F1 through third fork F3 are in a gate shaped swing type fork and each of the respective forks F1 through F3 includes a main body F1a through F3a, a supporting portion F1b through F3b and a pad portion F1c through F3c. The main body portion F1a, the main body portion F2a and the main body portion F3a are formed approximately in C-shape. As shown in Fig. 2, the fork head F1d is provided at the upper surface side of the main body portion F1a of the first fork F1 and is projecting integrally with the first fork F1. Further, as shown in Fig. 2, the fork head F2d and the fork head F3d are provided at the lower side surfaces, i.e., the surfaces facing the shaft 1, of the respective main body portions F2a and F3a of the second fork F2 and the third fork F3 and is projecting therefrom.

The supporting portion F1b through supporting portion F3b are provided at both end portions of the main body portion F1a through F3a, respectively. By fixing each pair of supporting portions F1b through F3b to the housing of the transmission 100, the first fork F1 through the third fork F3 are attached to the housing to be swingable.

As shown in Fig. 2, the reverse fork shaft 8 is attached to the housing of the transmission 100 directing towards the longitudinal side in the axis line direction. The reverse fork FR is movably attached to the reverse fork shaft 8 along in the axis line direction. The reverse fork connecting member FRd connects the reverse fork FR with the reverse fork shaft 8. The reverse engaging portion (not shown) which engages with the reverse inner lever Ir is provided at the reverse fork connecting member FRd.

The interlock member 9 is provided on the shaft 1 and rotatable with the shaft 1 as a unit and is not allowed to move in the axis line direction of the shaft 1. The interlock member 9 is configured such that when one of the forks F1 through F3 is selected by the selecting operation, the interlock member 9 prevents the remaining forks which are not selected from swinging movement.

As shown in Fig. 2, the first inner lever 11 is formed integrally with the shift select shaft head 2 and is fixed to the shaft 1 together with the shift select shaft head 2. As shown in Fig. 2, the second inner lever 12, the third inner lever I3 and the reverse inner lever Ir are fixed to the shaft 1, for example, by means of pin, etc. The first inner lever I1 is rotated together with the shaft 1 and the shift select shaft head 2 and engages with the fork head F1d of the first fork F1 or disengages from the fork head F1d thereof. The second inner lever I2 is rotated together with the shaft 1 and engages with the fork head F2d of the second fork F2 or disengages from the fork head F2d thereof. The third inner lever I3 is rotated together with the shaft 1 and engages with the fork head F3d of the third fork F3 or disengages from the fork head F3d thereof. The reverse inner lever Ir is rotated together with the shaft 1 and engages with the reverse fork connecting member FRd or disengages from the reverse fork connecting member FRd.

By the rotation of the select outer lever 3 and the select inner lever 4 by the transmitted select operation force, the select operation force is transmitted to the shift select shaft head 2 to rotate the shaft 1 about the axis line thereof. In other words, the shaft 1 is select-operated. Thus, depending on the angle of the rotational direction of the shaft 1, any one of the first inner lever 11, the second inner lever 12, the third inner lever I3 and the reverse inner lever Ir selectively engages with any one of the fork head F1d, the fork head F2d, the fork head F3d and the reverse fork connecting member FRd which are positioned at corresponding inner levers I1 through I3 and Ir.

Under this situation, since the guide pin 6 is integrally formed with the shift select shaft head 2, the guide pin 6 is rotated together with the shift select shaft head 2 accompanying the rotation of the shift select shaft head 2 (shaft 1). The guide pin 6 engages with and moves in the groove portion 72 formed at the guide plate 7.

In more detail, when the shift select lever 990 positions at the 1-2 speed gate 950b of the select gate 950e by select operation, the shaft 1 positions at the first rotational position and the first inner lever I1 engages with the fork head F1d. When the shaft 1 positions at a rotation position which is different from the first rotational position, the first inner lever I1 disengages from the fork head F1d.

When the shift select lever 990 positions at the 3-4 speed gate 950c of the select gate 950e by select operation, the shaft 1 positions at the second rotational position which is the position further rotated in a forward direction than the first rotational position and the second inner lever I2 engages with the fork head F2d. When the shaft 1 positions at the rotation position which is different from the second rotational position, the second inner lever I2 disengages from the fork head F2d.

When the shift select lever 990 positions at the 5-6 speed gate 950d of the select gate 950e by select operation, the shaft 1 positions at the third rotational position which is the position further rotated in a forward direction than the second rotational position, and the third inner lever I3 engages with the fork head F3d. When the shaft 1 positions at the rotation position which is different from the third rotational position, the third inner lever I3 disengages from the fork head F3d.

When the shift select lever 990 positions at the reverse gate 950a of the select gate 950e by select operation, the shaft 1 positions at the reverse rotational position which is the position further rotated in a reverse direction than the first rotational position, and the reverse inner lever Ir engages with the reverse fork connecting member FRd. When the shaft 1 positions at the rotation position which is different from the reverse rotational position, the reverse inner lever Ir disengages from the reverse fork connecting member FRd.

Under the state that any one of the first inner lever I1 through the third inner lever I3 and the reverse inner lever Ir is engaged with any one of the fork heads F1d through F3d and the reverse fork connecting member FRd which are positioned corresponding to the respective inner levers, when the shift select lever 990 is shifted in the shift direction, the shaft 1 moves along in the axis line direction. Thus, a speed change stage is established to complete the speed change operation.

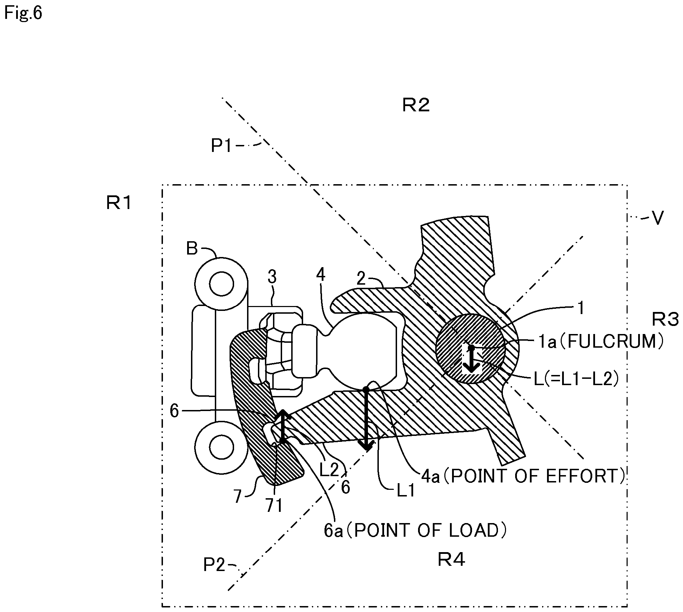

Under such speed change operation, when the shift select lever 990 is shift-operated, the select outer lever 3 is rotated and then, the select operation force L1 is transmitted to the shift select shaft head 2 via the select inner lever 4, as shown in Fig. 6. Thus, the shift select shaft head 2 and the shaft 1 are rotated as a unit in the select operation force L1 transmitting direction.

The guide pin 6 is integrally formed on the shift select shaft head 2. Accordingly, the shift select shaft head 2 and the guide pin 6 are rotated as a unit in the same direction. Upon selecting operation, the guide pin 6 engages with the groove portion 72 formed at the guide plate7. Therefore, the guide pin 6 rotates, being linked with the selecting operation of the shaft 1 until the groove portion 71 corresponding to the selected gate guided by the groove portion 72 of the guide plate 7, in detail, the 1-2 speed gate 950b and the 3-4 speed gate 950c. It is noted that regarding the reverse gate 950a and the 5-6 speed gate 950d, there exists no adjacently positioned gates at one side thereof in the select direction. Accordingly, the when the shaft 1 is select-operated in response to the select operation to the reverse gate 950a and the 5-6 speed gate 950d, the guide pin 6 rotates to the position outside of the both ends of the groove portion 72 of the guide plate.

Then, when the shift select lever 990 is shift-operated, the shift outer lever 5 is rotated along in the axis line direction, i.e., the shaft 1 is shift-operated. Accordingly, the guide pin 6 is guided by and moves within the groove portion 71 formed at the guide plate 7. Accompanying the completion of the speed change operation, the guide pin 6 engages with the guide plate 7 to restrict the rotation of the shaft 1.

Under the state that the speed change operation is completed, i.e., under the state that the shift select lever 990 is positioned at any one of the 1-2 speed gate 950b, the 3-4 speed gate 950c, the 5-6 speed gate 950d and the reverse gate 950a, when the shift select lever 990 is select-operated, the select outer lever 3 is rotated by the select operation force inputted for rotating the shaft 1. BY this rotation of the select outer lever 3, the select inner lever 4 is also rotated and for example, as shown in Fig. 6, the select operation force L1 acting in a direction where the shift select shaft head 2 is pushed down at the connecting portion 4a as the point of effort is transmitted to the shift select shaft head 2. Thus, the select operation force L1 is inputted to the shaft 1 which has the fulcrum 1a and the shaft 1 together with the shift select shaft head 2 tries to rotate as a unit therewith in the operation direction of the select operation force L1.

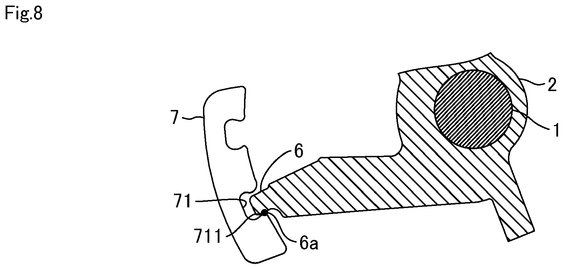

Under such case, when the shift select lever 990 is positioned within the 1-2 speed gate 950b and the 3-4 speed gate 950c, the guide pin 6 engages with the groove portion 71 formed at the guide plate 7. Further, when the shift select lever 990 is positioned within the 5-6 speed gate 950d and the reverse gate 950a, the guide pin 6 engages with the brim portion of the groove portion 71 formed at the guide plate 7. Under the state that the guide pin 6 is engaging with the brim portion of the groove portion 71, when the shift select lever 990 is select-operated, the guide pin 6 moves (rotates) in the groove width direction of the groove portion 71. Under such state, when the shift select lever 990 is positioned within the 1-2 speed gate 950b and the 3-4 speed gate 950c, the side surface of the guide pin 6 is brought into contact with the opening end portion 711 of the groove 71 (See Fig. 8). Further, when the shift select lever 990 is positioned within the 5-6 speed gate 950d and the reverse gate 950a, the side surface of the guide pin 6 is brought into contact with the brim portion of the guide plate 7.

When the shaft 1 is select-operated, as shown in Fig. 6, after completion of the speed change operation, the guide pin 6 is brought into contact with the guide plate 7 at the engaging portion 6a and the reaction force L2 is inputted to the guide pin 6 having the engaging portion 6a as the point of load from the guide plate 7. Here it is noted that the connecting portion 4a between the select inner lever 4 and the shift select shaft head 2 and the engaging portion 6a engaging the guide pin 6 and the guide plate 7 are arranged within the area R1 which is one of the four areas R1 through R4. Further, the fulcrum 1a, the connecting portion 4a as the point of effort and the engaging portion 6a as the point of load exist on the same one virtual plane V. Then, when the connecting portion 4a and the engaging portion 6a are arranged wthin the same one area R1, the operation direction of the select operation force L1 inputted to the connecting portion 4a and the operation direction of the reaction force L2 generated at the engaging portion 6a are mutually opposite to each other.

Thus, when the shaft 1 is select-operated after the completion of the speed change operation, the resultant force L is inputted to the shaft 1 having the fulcrum 1a. The value of the resultant force L can be obtained by subtracting the reaction force L2 from the select operation force L1 (i.e., difference between the select operation force L1 and the reaction force L2). The magnitude of the resultant force L inputted to the shaft 1 becomes smaller than the magnitude of the select operation force L1 due to the subtraction of reaction force L2. Therefore, the deflection amount of the shaft 1 by the operation of the resultant force L becomes smaller than the deflection amount of the shaft 1 by the operation of the select operation force L1. Accordingly, when the connecting potion 4a and the engaging portion 6a are positioned within the same area R1 and the fulcrum 1a, the connecting portion 4a as the point of effort and the engaging portion 6a as the point of load exist on the same virtual plane V, the deflection amount of the shaft 1 when the shaft 1 is select-operated after completion of the speed change operation becomes small. As a result, after completion of the speed change operation, i.e., after the completion of shift operation, when the shift select lever 990 is select-operated, the displacement of the shift select lever 990 in the select direction (a so-called select rattling) can be lessened.

As will be understood from the explanation hitherto, the transmission 100 as the manual transmission according to the embodiment includes a shaft 1, a shift select shaft head 2 as the connecting member, a select outer lever 3 and a select inner lever 4 as the lever member, a guide pin 6 and a guide plate 7. The shaft 1 is movable along in the axis line direction and at the same time rotatable about the axis line. The shaft 1 performs a shifting operation as one of the movement and the rotation and a select operation as the other of the movement and the rotation. The shift select shaft head 2 is fixed to the shaft 1 and moves and rotates together with the shaft 1 as a unit. The select outer lever 3 and the select inner lever 4 rotate the shaft 1 and the shift select shaft head 2 about the axis line as a unit based on the select operation force L1 inputted to the shift select lever 990 via the select outer lever 3, the select inner lever 4 being connected to the shift select shaft head. The guide pin 6 is provided projecting from the outer peripheral surface of the shaft 1 and moves and rotates together with the shaft 1 as a unit in response to the shifting operation and the selecting operation of the shaft 1. The guide plate 7 is formed with the groove portions 71 and 72 at a portion of the shaft 1 engaging with the guide pin 6 which displaces in response to the shifting operation and the selecting operation of the shaft 1 thereby to guide the shifting operation and the selecting operation of the shaft 1. The speed change operation of the transmission 100 is performed such that one of the plurality of forks F1 through F3 connected to the shaft 1 by the selecting operation of the shaft 1 is selected and the selected one fork is operated by the shifting operation to form a speed change stage thereby to complete the speed change operation.

The transmission 100 includes a connecting portion 4a at which the shift select shaft head 2 and the select inner lever 4 are connected and an engaging portion 6a at which the groove portion 71 formed at the guide plate 7 engages with the guide pin 6, wherein the guide pin 6 and the guide plate 7 are engaged at the engaging portion 6a accompanying the completion of the speed change operation and under the state that the guide pin 6 restricts the rotation of the shaft 1, assuming that a point 1a which is a portion of the shaft 1 on the axis line is the fulcrum 1a, the connecting portion 4a is the point of effort, and that the engaging portion 6a is the point of load, when the fulcrum 1a, the connecting portion 4a (point of effort) and the engaging portion 6a (point of load) exist on the same virtual plane V, the shift select shaft head 2, the select inner lever 4, the guide pin 6 and the guide plate 7 are arranged so that the operation direction of the select operation force L1 inputted to the connecting portion 4a is opposite to the operation direction of the reaction force L2 generated at the engaging portion 6a as the point of load.

Further, in this case, the connecting portion 4a and the engaging portion 6a are arranged in one area R1 among the four areas R1 through R4 which are delimited by the first virtual plane P1 which includes the axis line of the shaft 1 and the second virtual plane P2 which includes the axis line of the shaft 1 and is orthogonal to the first virtual plane P1.

According to the above configuration, after the shifting operation of the shaft 1 is completed, the guide pin 6 can restrict the rotation of the shaft 1 by engaging with the groove portion 71 of the guide plate 7. Thus, under the state that the rotation of the shaft 1 is restricted by the guide pin 6 and the guide plate 7, when the fulcrum 1a, the connecting portion 4a (point of effort) and the engaging portion 6a (point of load) exist on the same virtual plane V, if the select operation force L1 inputted from the connecting portion 4a tries to rotate the shaft 1 having the fulcrum 1a, the reaction force L2 is applied to the guide pin 6 from the engaging portion 6a as the point of load.

According to the transmission 100, the connecting portion 4a and the engaging portion 6a are arranged in one area R1 among the four areas R1 through R4 which are delimited by the first virtual plane P1 and the second virtual plane P2. Thus, the operation direction of the reaction force L2 inputted from the engaging portion 6a to the guide pin 6 can be set to be opposite to the operation direction of the select operation force L1 inputted to the shift select shaft head 2 and the shaft 1 from the connecting portion 4a. In other words, the reaction force L2 inputted from the engaging portion 6a can reduce the select operation force L1 inputted from the connecting portion 4a. When the select operation force L1 is inputted from the shaft 1 and the shift select shaft head 2 which rotation is restricted, the select operation force L1 inputted from the connecting portion 4a is operated as a force that deflects the shaft 1 having the fulcrum 1a. Accordingly, since the reaction force L2 inputted from the engaging portion 6a can reduce the select operation force L1 inputted from the connecting portion 4a, the force that deflects the shaft 1, i.e., the resultant force L of the select operation force L1 and the reaction force L2 (L = L1 - L2) can be lessened compared to the case where only the select operation force L1 is inputted to the shaft 1.

Accordingly, when the shaft 1 is select-operated after the completion of the shifting operation (speed change operation), in other words, when the select operation is performed under the state that the shift select lever 990 is shift-operated by the driver of the vehicle, the deflection amount of the shaft 1 can be lessened. Accordingly, a rattling, i.e., a so-called select rattling, caused by an unnecessary shifting of the shift select lever 990 after completion of the shift operation can be lessened to thereby achieve a good shift feeling.

In this case, the guide pin 6 is formed integrally with the shift select shaft head 2 and accordingly, a guide mechanism can be provided at the shift select shaft head 2 to thereby be able to integrate components which are to be connected to the shaft 1. Thus, since the number of components to be connected to the shaft 1 can be reduced and a downsized- and weight-reduced transmission 100 can be proposed. Further, by integrating the components, for example, assembling cost, etc., can be reduced.

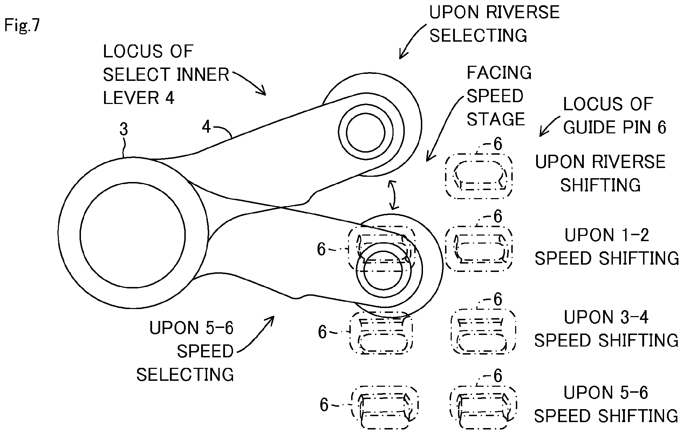

Further, by providing the guide pin 6 integrally with the shift select shaft head 2, the locus of the select inner lever 4 and the locus of the guide pin 6 under the select operation can be indicated as shown in Fig. 7. In this case, as shown in Fig. 5, the speed stage facing the reverse shifting does not exist for the reverse gate 950a. Accordingly, as shown in Fig. 7, the guide pin 6 does not move to the facing speed stage of the reverse shifting. Therefore, the select inner lever 4 rotates about the speed stage facing the reverse shifting where the guide pin 6 does not move. Thus, the clearance between the select inner lever 4 and the shift select shaft head 2 can be lessened. This can attain the downsizing of the transmission 100.

In these cases, as explained above, the shifting operation of the shaft 1 corresponds to the movement of the shaft 1 and the selecting operation of the shaft 1 corresponds to the rotation of the shaft 1. The groove portion 71 formed at the guide plate 7 is formed to be extending in the direction of movement of the guide pin 6 which corresponds to the shifting operation of the shaft 1 and the groove portion 72 formed at the guide plate 7 is formed to be extending in the rotational direction of the guide pin 6 which corresponds to the selecting operation of the shaft 1.

According to the configuration, since the groove portion 71 and the groove portion 72 are mutually intersecting with each other and under the state that the speed change operation is completed, i.e., under the state that the guide pin 6 is engaged with the groove portion 71, when the shaft 1 is rotated by the selecting operation, the reaction force is surely generated at the engaging portion 6a. This can surely reduce the force that deflects the shaft 1, i.e., the resultant force L inputted to the shaft 1, which leads to the lessening of the deflecting amount of the shaft 1. Accordingly, an unnecessary shifting (rattling) of the shift select lever 990 can be reduced to thereby obtain a good shift feeling.

The groove width of the opening end portion 711 of the groove portion 71 is set to be narrower than the groove width of the deep side portion 712 which corresponds to the bottom portion of the groove portion 71 and under the state that the speed change operation is completed, the guide pin 6 is brought into contact with the opening end portion 711 of the groove portion 71 when the shaft 1 is select-operated.

According to the configuration, as shown in Fig. 8, since the side surface of the guide pin 6 is brought into contact with the opening end portion 711 of the groove portion 71 formed at the guide plate 7, the side surface of the guide pin 6 and the opening end portion 711 corresponds to the engaging portion 6a as the point of load. As explained above, since the connecting portion 4a as the point of effort and the engaging portion 6a as the point of load are arranged within the area R1, the deflecting amount of the shaft 1 having the fulcrum 1a can be reduced. By this reduction of the deflecting amount, upon the selecting operation after completion of the speed change operation (after the shifting operation), the inclination of the guide pin 6 relative to the guide plate 7 caused by the deflection o the shaft 1 can be reduced. As a result, widening of the groove width of the groove portion 71 considering the inclination of the guide pin 6 becomes unnecessary. Thus, the groove width of the deep side portion 712 can be narrowed compared to the groove width at the opening end portion 711. This can also lessen a gap between the guide pin 6 and the opening end portion 711. Further, the side surface of the guide pin 6 and the opening end portion 711 with a narrower groove width become the engaging portion 6a and the restriction of rotation of the shaft 1 can be more surely attained. Thus, by reducing the unnecessary shifting amount (rattling) by the shift select lever 990, a good shift feeling can be attained.

### (Embodiment)

The present invention is not limited to the embodiment explained above and various modifications and changes within the scope of the invention are applicable.

For example, according to the above embodiment, the guide pin 6 is formed integrally with the shift select shaft head 2. However, instead of this structure, it is possible to configure that the guide pin 6 and the shift select shaft head 2 are formed separately and that the guide pin 6 is directly fixed to the shaft 1. In such configuration the connecting portion 4a as the point of effort and the engaging portion 6a as the point of load are arranged within one area R1 among the four areas R1 through R4. The operation direction of the select operation force L1 inputted at the connecting portion 4a becomes opposite to the operation direction of the reaction force L2 inputted at the engaging portion 6a. Thus, the same effect of the embodiment of the invention can be obtained as well.

Further, according to the embodiment, the connecting portion 4a and the engaging portion 6a are arranged within the same area R1. In this case, the area within which the connecting portion 4a and the engaging portion 6a are arranged may be any one of the four areas R1 through R4 and the operation direction of the select operation force L1 inputted at the connecting portion 4a becomes opposite to the operation direction of the reaction force L2 inputted at the engaging portion 6a. Thus, the same effect of the embodiment of the invention can be obtained as well.

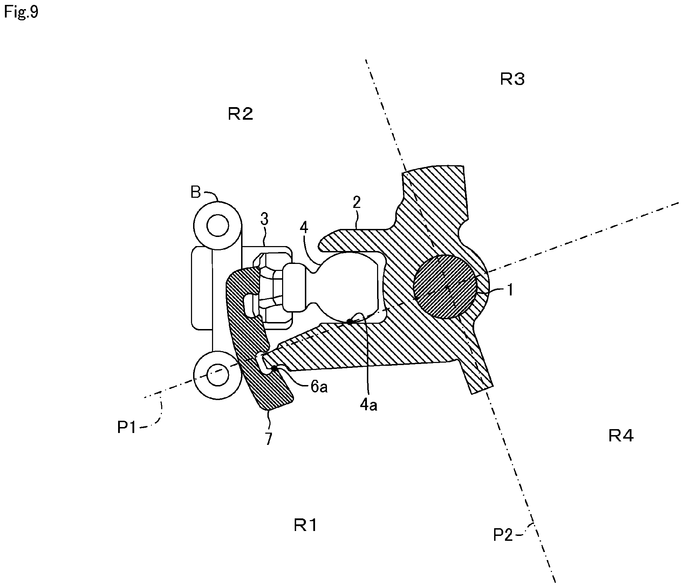

Further, it is noted that as shown in Fig. 9, for example, when the connecting portion 4a exists on the first virtual plane P1, as similar to the embodiment, the engaging portion 6a is arranged within the area R1 and accordingly, the operation direction of the select operation force L1 inputted at the connecting portion 4a becomes opposite to the operation direction of the reaction force L2 inputted at the engaging portion 6a. Further, when the connecting portion 4a exists on the first virtual plane P1, even the engaging portion 6a is arranged within the area R2, the operation direction of the select operation force L1 inputted at the connecting portion 4a becomes opposite to the operation direction of the reaction force L2 inputted at the engaging portion 6a. Accordingly, when the connecting portion 4a exists on the first virtual plane P1, the engaging portion 6a may be arranged within the area R1 or the area R2 which is different from the area R1. It is noted here that the first virtual plane P1 is included in either the area R1 or the area R2. When the first virtual plane P1 is included in the area R2, as shown in Fig. 9, the engaging portion 6a is arranged in the area R1 which faces the area R2 in which the connecting portion 4a on the first virtual plane P1 is arranged and which is different from the area R2. Oppositely, when the first virtual plane P1 is included in the area R1, although not shown in the drawings, the engaging portion 6a is arranged in the area R2 which faces the area R1 in which the connecting portion 4a on the first virtual plane P1 is arranged and which is different from the area R1. It is also noted that the connecting portion 4a may not necessarily be arranged on the first virtual plane P1.

Further, when the connecting portion 4a exists on the first virtual plane P1, for example, it may be possible that by providing a pair of guide pins 6 and guide plates 7 in the area R1 and R2, respectively, the engaging portions 6a are set to be arranged in the areas R1 and R2, respectively. In other words, when the connecting portion 4a exists on the first virtual plane P1, engaging portions 6a are arranged in the adjacently positioned areas R1 and R2 which include the connecting portion 4a among the four areas R1 through R4 which are delimited by the first virtual plane P1 and the second virtual plane P2. In such case, the operation direction of the select operation force L1 inputted at the connecting portion 4a becomes opposite to the operation direction of the respective reaction forces L2 inputted at the respective engaging portions 6a which are arranged at the respective areas R1 and R2. Thus, the effect of the invention same to the embodiment can be attained. It is noted here that even when the connecting portion 4a exists on the first virtual plane P1 and the engaging portions 6a are arranged at the mutually adjacently positioned areas R1 and R2 which include the connecting portion 4a, the connecting portion 4a and the engaging portions 6a are arranged in one area R1 among the four areas R1 through R4 delimited by the first virtual plane P1 and the second virtual plane P2 and in another area R2 among the four areas R1 through R4.

According to the embodiment, the first fork F1 through the third fork F3 are swingably supported on the housing of the transmission 100 by the supporting portions F1b through F3b, respectively. However, even the first fork F1 through the third fork F3 are movably supported on the housing of the transmission 100 in the axis line direction, respectively, by providing the connecting portion 4a and the engaging portion 6a in one area among the four areas R1 through R4, the deflection amount of the shaft 1 can be lessened. In such modification, the above effect similar to the embodiment can be expected.

Further, according to the embodiment above, the transmission 100 in which the shift select lever 990 which is to be operated by a driver of the vehicle and the select inner lever 3 and the select outer lever 5 are connected via the speed change cable K1, respectively is adopted. However, as the transmission 100, for example, an automated manual transmission (AMT) in which the speed change operation is executed by the operation of the shift select lever 990 by the driver of the vehicle, or without such operation, the speed change operation is executed automatically by a driving force of the actuator in response to the vehicle running state may be adopted.

In such case also when the select operation force from the actuator is inputted to the select inner 3, the operation direction of the select operation force L1 inputted at the connecting portion 4a as the point of effort becomes opposite to the operation direction of the reaction force L2 inputted at the engaging portion 6a as the point of load. Accordingly, the resultant force L inputted t the shaft 1 having the fulcrum 1a can be lessened. Thus, even the automated manual transmission is used as the transmission 100, the deflection amount of the shaft 1 can be lessened. As a result, the shaft 1 can be properly shift-operated or select-operated cooperatively with the shift operation or the select operation of the shift select lever 990 by the driver of the vehicle to thereby attain a good shift feeling. In addition, the deflection amount of the shaft 1 can be lessened and therefore, for example, the number of bearings or the like of the shaft 1 can be reduced to be able to provide a down-sized transmission.

Further, according to the embodiment, when the shift select lever 990 is select-operated, the shaft 1 is rotated as the selecting operation. However, instead of this structure, it is possible to configure the structure that when the shift select lever 990 is shift-operated, the shaft 1 is rotated as the shifting operation. In such case, after the completion of the speed change operation, for example, even the shift select lever 990 is further shift-operated in the shift direction to rotate the shaft 1, as shown in Fig. 6, similar to the embodiment, the reaction force L2 can be inputted to the guide pin 6 from the engaging portion 6a. Accordingly, in this case also, the deflecting amount of the shaft 1 can be lessened, and unnecessary shifting of the shift select lever 990 can be reduced. Thus, a good shift feeling can be attained.

### [Reference Numerals and Signs]

1: shift select shaft, 1a: portion of shift select shaft (fulcrum), 2: shift select shaft head (connecting member), 3: select outer lever (lever member), 4: select inner lever (lever member), 4a: connecting portion (point of effort), 5: shift outer lever, 6: guide pin, 6a: engaging portion (point of load), 7: guide plate, 71: groove portion, 72: groove portion, 990: shift select lever, P1: first virtual plane, P2: second virtual plane, R1 through R4: area, B: bracket, V: same virtual plane.

## Claims

1. A manual transmission comprising:
a shift select shaft movable along in an axis line direction and at the same time rotatable about the axis line;
a connecting member fixed to the shift select shaft and movable with the shift select shaft as a unit and at the same time rotatable therewith;
a lever member connected to the connecting member and at the same time based on an operation force inputted for rotating the shift select shaft, pushing the connecting member so that the shift select shaft and the connecting member are rotated about the axis line;
a guide pin provided to be projecting from an outer peripheral surface of the shift select shaft and movable with the shift select shaft as a unit and at the same time rotatable with the shift select shaft in response to a movement of the shift select shaft in the axis line direction and a rotation of the shift select shaft about the axis line; and
a guide plate formed with a groove portion with which the guide pin which displaces in response to the movement and the rotation of the shift select shaft engages at a portion of the shift select shaft and guides the movement and the rotation of the shift select shaft, wherein
one fork among a plurality of forks which is connected to the shift select shaft is selected by a selecting operation which corresponds to one of the movement and the rotation of the shift select shaft and the selected one fork is operated by a shifting operation which corresponds to the other of the movement and the rotation of the shift select shaft to thereby establish a speed change stage to complete a speed change operation, and
a connecting portion provided the connecting member connecting to the lever member,
an engaging portion provided the guide pin engaging with the groove portion formed at the guide plate, and, wherein
the connecting member, the lever member, the guide pin and the guide plate are arranged so that under a state that the guide pin and the guide plate are engaged at the engaging portion and at the same time the guide pin restricts the rotation of the shift select shaft after a completion of the speed change operation, assuming that the portion of the shift select shaft is a fulcrum, the connecting portion is a point of effort, the engaging portion is a point of load and that the fulcrum, the point of effort and the point of load exist on a same virtual plane, an operation direction of a reaction force generated at the point of load becomes a direction opposite to the operation direction of the operation force inputted to the point of effort.

2. The manual transmission according to claim 1, wherein
the connecting portion and the engaging portion are arranged within one area among four areas delimited by a first virtual plane which includes the axis line of the shift select shaft and a second virtual plane which includes the axis line of the shift select shaft and which is orthogonal to the first virtual plane.

3. The manual transmission according to claim 1 or 2, wherein
the guide pin is formed at the connecting member integrally therewith as a unit.

4. The manual transmission according to any one of claims 1 through 3, wherein
the shifting operation by shift select shaft corresponds to the movement of the shift select shaft and the selecting operation of the shift select shaft corresponds to the rotation of the shift select shaft, and wherein
the groove portion formed at the guide plate is formed extending in a moving direction of the guide pin corresponding to the shifting operation of the shift select shaft and at the same time extending in a rotation direction of the guide pin corresponding to the selecting operation of the shift select shaft.

5. The manual transmission according to any one of claims 1 through 4, wherein
a groove width of the groove portion formed at the guide plate at an opening end portion is set to be narrower than a groove width of a bottom portion of the groove portion and wherein
the guide pin is brought into contact with the opening end portion of the groove portion when the shift select shaft performs the selecting operation under a state that the speed change operation has been completed.

6. The manual transmission according to claim 1, wherein
the engaging portion is arranged in an area among four areas delimited by a first virtual plane which includes the axis line of the shift select shaft and a second virtual plane which includes the axis line of the shift select shaft and which is orthogonal to the first virtual plane, the area being facing to another area which is different therefrom and in which the connecting portion is arranged.

7. The manual transmission according to claim 6, wherein
the connecting portion exists on the first virtual plane.
